# EUROPEAN PATENT SPECIFICATION

(11) **EP 3 228 501 B1**
(45) Date of publication and mention of the grant of the patent: **04.05.2022**
(21) Application number: 17382116.6
(22) Date of filing: 07.03.2017
(51) Int. Cl.: B60Q 1/32, B60R 13/00, G09F 13/04, G09F 21/04

(54) **LIGHTING DEVICE FOR AN OUTER COVER ON A SIDE OF A VEHICLE**
BELEUCHTUNGSVORRICHTUNG FÜR EINE ÄUSSERE ABDECKUNG AUF EINER SEITE EINES FAHRZEUGS
DISPOSITIF D'ÉCLAIRAGE POUR UN COUVERCLE EXTÉRIEUR SUR UN CÔTÉ D'UN VÉHICULE

(30) Priority: 17.03.2016 ES 201630315
(43) Date of publication of application: 11.10.2017
(73) Proprietor: Seat, S.A., 08760 Martorell (ES)
(72) Inventor: GARCÍA SÁNCHEZ, Daniel, 08760 Barcelona (ES); GUTIÉRREZ FERNÁNDEZ, Marta, 08760 Barcelona (ES); CAYUELA CALVO, José Luís, 08760 Barcelona (ES)
(74) Representative: Elzaburu S.L.P.

(56) References cited:
- EP-A1- 2 846 086
- EP-A2- 2 062 784
- DE-A1-102011 115 685
- FR-A1- 3 018 239
- GB-A- 2 474 742
- US-A- 4 494 326
- US-A1- 2002 043 012
- US-A1- 2004 090 767
- US-A1- 2009 080 208
- US-A1- 2009 251 920
- US-A1- 2010 296 303
- US-B2- 9 016 910
- Yao Po-Hung ET AL: "Polarized backlight with constrained angular divergence for enhancement of light extraction efficiency from wire grid polarizer References and links", J. Opt. Soc. Korea Appl. Phys. Lett. J. Opt. Soc. Am. A Jpn. J. Appl. Phys. J. Appl. Phys. Opt. Express J. Opt. Soc. Korea J. Disp. Technol. Nov Jan Jan OPTICS EXPRESS Opt. Express Opt. Lett. Am. J. Phys. Opt. Lett, 1 January 2009 (2009-01-01), pages 152-157, XP055822939, Retrieved from the Internet: URL:https://www.osapublishing.org/DirectPD FAccess/7DE5F4FB-71C7-4930-98E8588E63851D0 7_227652/oe-20-5-4819.pdf?da=1&id=227652&s eq=0&mobile=no [retrieved on 2021-07-09]

## Description

### SUBJECT MATTER OF THE INVENTION

The present patent application relates to a lighting arrangement comprising an outer cover for a side area of a vehicle according to claim 1.

### BACKGROUND TO THE INVENTION

Various exterior lighting devices located at various points on the body of a vehicle are presently known. Thus, an actuating device for unlocking the doors of a keyless vehicle is known in the prior art, as can be seen in document US2007295043-A1 The actuating device includes a housing defining a periphery and an interior volume. A cover plate is fixedly secured to the housing at the periphery. The cover plate defines an inboard surface facing the interior volume and an outboard surface opposite the inboard surface. The outboard surface is opaque in standard ambient light conditions. The actuating device also includes a switch that is operatively connected to the inboard surface of the cover plate at a defined location for toggling the device between on and off conditions. The actuating device also includes a presence sensor identifying when an operator is adjacent to the cover plate. An internal light illuminates the cover plate such that light passes through the cover plate and out the outboard surface to illuminate the switch for the operator.

This device presents a set of illuminated capacitive actuators for introducing a code for opening the vehicle without a key. It includes LED diodes that emit light in a direction opposite to the direction of projection towards the operator, by filling a light cavity and allowing the light to exit only via an intermediate element with a graphic, located between the sensors and the cover element. The cover is tinted black. Note, however, that the generation of light is not optimal: the LEDs emit light in a direction opposite to the direction of projection. The aim is to fill the interior volume with light, resulting in significant loss and inefficiency, leading to low quality in terms of the homogeneity of the projected light, as well as a projected light of low intensity.

Also known in the prior art, as can be seen in document US9016910, is a vehicular trim component with interior and exterior surfaces, which comprises: a partially light-transmissive substrate; an adjacent illumination source, the illumination source being actuatable between an illuminated state and a non-illuminated state; and a variably light-transmissive layer on a first surface of the substrate. The variably light-transmissive layer includes a non-light-transmissive opaque portion and a light-transmissive portion. The light-transmissive portion comprises one or more lines defined through the opaque portion and arranged to define visually perceptible indicia when the illumination source is in the illuminated state. Each line is visually imperceptible to the naked eye when the illumination source is in the non-illuminated state.

To be specific, the light of the LED emitter is oriented in the same direction as the direction of projection of the logo, mask or intermediate element with a graphic, allowing light to pass through a transparent zone. However, there are clear differences as regards lighting and the generation of a homogeneous concept of lighting. In particular, when an LED emits in the same direction as the direction of propagation, very bright areas (just in front of the emitter) and areas not so well lit (where there is no emitter directly behind) are perceived. Auras and arcs are produced, making it impossible to obtain a homogeneous image.

Also known in the prior art, as can be seen in document EP2062784, is an exterior component for a vehicle which includes a first member having a decorative surface provided on an external portion thereof for transmitting light, the first member further including a first engaging portion, a second member having a second engaging portion engaging with the first engaging portion of the first member, the first member and the second member forming a double layered structure. It also includes a light-emitting member. The light is shut off in response to a supply of electricity supplied from the vehicle.

It must be pointed out that the solutions proposed may only be used with the engine stopped, since none of them comply with the approval requirements for a vehicle when running, discussed below. In this respect, it should be mentioned that light is transverse electromagnetic radiation, i.e. that the oscillation of the electromagnetic field is perpendicular to the propagation thereof. In general, conventional light sources, such as the sun, emit light with electric fields in any direction with respect to the direction of propagation (but always perpendicular thereto).

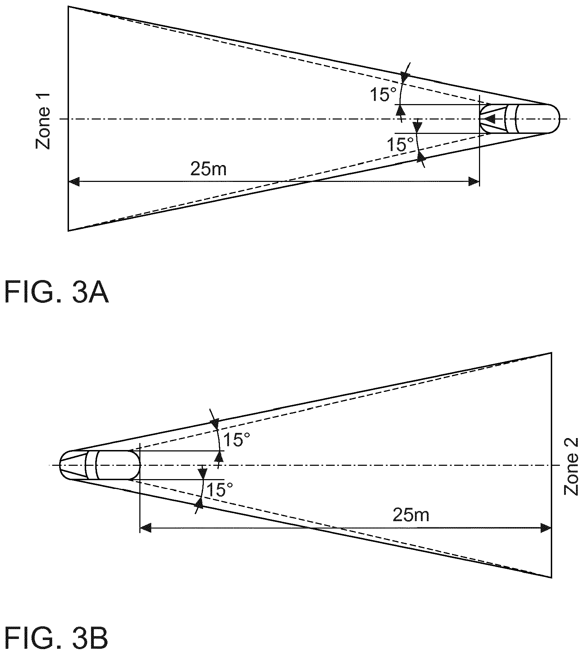

Figures 3A and 3B show the technical approval requirements for vehicles, according to which there must be no emitter of direct light visible in the following marked areas for a vehicle when running, similar to surface cones, at a distance of 25 m. Therefore, an observer present within the areas marked in Figures 3A and 3B must not see any red light-emitting member (at the front of the vehicle) or white light-emitting member (at the rear of the vehicle) except for those provided for lighting, braking, indicating, etc. Consequently, it is necessary to find a solution that ensures the vehicle complies with the approval requirements while allowing projection of the logo or graphic to be illuminated when said vehicle is running or is in motion.

It is also known from the prior art, as can be seen in document US4494326, a marking display structure for a motor vehicle window, arranged to illuminate, from inside, a marking display element so that the marking, which represent the type, model or the like of the motor vehicle, can be recognized not only during day time but also at night.

It is also known from the prior art, as can be seen in document FR3018239, a vehicle lighting device comprising at least one light emitter connected to a light transmitting means, a partially translucent upper layer, the light transmitting means being essentially flat and comprising a region having at least one optical structure deviating light towards the upper layer, and an opaque mask having at least one superimposed transparent zone , between the transmitting means and the upper layer, said lighting device comprising a lower reflective layer adjacent the light transmitting means and located on the opposite side of the opaque mask having at least one transparent zone. Thus, said lighting device is invisible when it is in its off state and has, by design, the ability to emit complex shapes through a surface that, in appearance, is not a luminous element.

Thus, there is clearly still a need for a lighting device for an outer cover on a side of a vehicle, in the form of a trim element, in which the light emitted to the exterior is homogeneous, and which complies with the technical approval requirements for the vehicle as regards the projection of light towards the side areas when the vehicle is running.

### DESCRIPTION OF THE INVENTION

The present invention proposes projecting an illuminated logo at any point on the side of the vehicle, preferably the plastic parts of the doors, either front or rear, making the minimum possible alterations to the current structure of said door, by, for example, using an LED emitter that lights up a logo through an opening in the exterior door trim. Consequently, it is not the aim of the present invention to generate a light beam to light up the side area of the vehicle, but to illuminate a logo located on the side of the vehicle so that it can be seen under all kinds of conditions.

As mentioned above, light is transverse electromagnetic radiation, i.e. the oscillation of the electromagnetic field is perpendicular to the propagation thereof. However, by different physical mechanisms, a single direction of oscillation can be filtered, in which state the light is polarized.

Thus, polarized light is light with a predetermined direction of oscillation. There are three types of polarized light: linear, circular and elliptical. A polarizing filter may be considered to be a grid that only allows the passage of light that oscillates in the plane parallel to the vector normal to the surface of the grid. The light transmitted to the other side of the polarizing element is considered to be polarized light. In reality, commercial polarizing filters consist of a polymer chain stretched to the limit, so that the molecules act as a grid that strongly absorbs a polarized component of light and is very transparent to the other component, as described by Malus's Law. Thus, a polarizing element comprises walls that restrict the direction of exit of the light, confining the field in which the light is projected.

Thus, in more detail, the invention consists of a lighting arrangement with an outer cover for a side area of a vehicle, in which the outer cover comprises a structural panel of the outer cover, in which the structural panel comprises an aperture, and in which the lighting arrangement comprises a lighting device, whereby the lighting device comprises a housing facing the aperture and defining an interior volume between the housing and the aperture in the structural panel, at least one light-emitting member arranged in the interior volume and actuatable in a first on state or a second off state, a photolith film with at least one graphic element, in which the photolith film is arranged between the at least one light-emitting member and the structural panel, and in which the outer cover is partially opaque, so as to enable the at least one graphic element to be displayed, in which the lighting device comprises at least one light orientation means wherein the light orientation means is a polarizing element, such that the direction of the light emitted by the at least one light-emitting member is restricted, confining the field of illumination of light emitted towards the exterior, and in which the at least one light orientation means and the photolith film are housed in the interior volume between the housing and the aperture in the structural panel and are arranged parallel to and superimposed on one another. It is thus possible to project towards the exterior of the vehicle an image or graphic configuration determined by the photolith film element, while giving said image a substantially homogeneous appearance, without areas which are brighter than others, and in such a way that the image is projected with an orientation substantially perpendicular to the vehicle body.

Note that the angle or direction of the light beams may be modified by means of the light orientation means, so that a high homogeneity of the projected light is advantageously achieved in a minimum available space. This requirement is discussed in more detail below.

Preferably, the at least one light orientation means comprises a light guide, in which said light guide preferably consists of a flat plate through which a generated image of greater clarity and quality is obtained. The light emitted by the at least one light-emitting member is advantageously distributed homogeneously over the entire surface of the light guide. Thus, there are no auras and/or arcs, which make it impossible for the transmitted light to be homogeneous.

Advantageously, the light guide is an essentially flat plate, in which the light guide comprises at least one light transmission surface and at least one end where the light emitted by the at least one light-emitting member strikes, so that the at least one light transmission surface is substantially parallel to the photolith film. Thus, and preferably, the light from the light-emitting member, preferably an LED, is introduced via one end of the light guide, perpendicular to the direction of emission towards the exterior of the vehicle body. It is important to note that the side area of the vehicle generally has very small volumes of space, especially in the direction transverse to the direction of forward travel of the vehicle. Accordingly, and in order to avoid modifying the structure of a door, for example, the lighting device of the present invention must have a small overall thickness. Such an arrangement of the light guide saves on space, especially in the direction of exit of the light beam. Therefore, the light-emitting member emits in a first direction, the light guide distributes the light received homogeneously over the entire transmission surface, and the light is reoriented towards the side of the vehicle in a second direction. "Light transmission surface" means each of the two lateral faces of the flat plate. "End" means each of the four sides of the flat plate.

According to another aspect of the invention, the light guide comprises a plurality of optical structures such that the light is dispersed particularly in a direction substantially perpendicular to the at least one light transmission surface. Said substantially perpendicular direction will be either towards the interior of the vehicle, or towards the exterior. Thus, the light is reoriented, at least partially, from the direction of emission from the light-emitting member to the direction appropriate for the functioning of the present invention, namely towards the exterior of the vehicle body.

The set of optical structures are arranged inside the light guide, next to the two transmission surfaces, or faces of the flat plate. Said optical structures are preferably created by laser. The position thereof allows the light beams to be dispersed in any direction, especially towards the aperture in the structural panel.

The lighting device further comprises a reflective element arranged between the housing and the light guide, so that the reflective element is substantially parallel to the at least one light transmission surface of the light guide. Said reflective element bounces, towards the exterior of the vehicle, the beams of light which go in a perpendicular direction opposite to the direction of exit. In this way, greater lighting efficiency is achieved by reorienting most of the light emitted by the light-emitting member towards the aperture in the structural panel, and thus towards the exterior of the vehicle, optimizing the functioning of the lighting device.

In one particular embodiment, the optical structures are preferably placed on the surface closest to the reflective element so that most of the light beams from the light-emitting member are reoriented towards the exterior without having to bounce off the reflective element itself.

Advantageously, the reflective element comprises at least one matt white surface. Consequently, at least the surface of the reflective element facing the light guide is matt white. This optimizes recovery of the light directed towards the rear of the device and interior of the vehicle, said light being directed, with minimal loss, towards the front of the device, and exterior of the vehicle, to be illuminated.

According to the invention, the at least one light orientation means is a polarizing element, for confining the field of illumination of light emitted towards the exterior, in order to comply with the aforementioned approval requirements in terms of restriction of the field of view, so that the lighting device may be turned on, projecting the logo or graphic element of the photolith film while the vehicle is running, in a direction substantially perpendicular to the side of the vehicle. Therefore, the graphic element may only be viewed from a position essentially opposite the lighting device and essentially perpendicular to the direction of forward travel of the vehicle. Thus, an observer positioned head on or at the front of the vehicle, even if he/she is to the side of the vehicle, will not see the illuminated graphic device of the present invention, thus complying with the approval requirements mentioned above.

More specifically, the polarizing element is a film comprising a plurality of microwalls that restrict the direction of exit of the light. Said microwalls act like a grid that strongly absorbs a polarized component of light, and is very transparent to the other component.

According to another aspect of the invention, the photolith film comprises at least one first opaque zone and at least one second transparent zone. A graphic element or logo is projected to the exterior thanks to the restriction of the light in the opaque zone, and the transmission of light through the transparent zone.

More specifically, the at least one first opaque zone is obtained by applying paint to the photolith film and the at least one second transparent zone is obtained by lasering to remove the paint. Thus, by means of lasering, the paint is removed to allow passage through the transparent zones in the photolith film, which may be a plastic substrate. Such a laser option is more economical than others, and has sufficient accuracy. In a preferred embodiment, different colours are achieved through a single LED light-emitting member, by providing a plastic substrate of the photolith film with chromatic variation.

According to another aspect of the invention, the partially opaque outer cover has a smoked black finish. The smoked black finish prevents anyone from seeing the inside and therefore the logo and the rest of the lighting device, whereas, when on, it allows transmission of light, revealing the desired logo lit up.

Note that the partially opaque outer cover is produced by bi-injection moulding, in which the smoked black finish is injected into an outer face of the structural panel, obtaining said finish simply and without a significant increase in costs.

In a first example not within the invention, the lighting device successively comprises the housing, the reflective element, the light guide and the photolith film, facing the aperture in the structural panel, and covered by the partially opaque outer cover, the reflective element, the light guide, the photolith film and the aperture being superimposed on one another. Said arrangement of elements maximizes performance in terms of light efficiency and homogeneity of the photolith film image, i.e. the logo, which is transmitted to the exterior. Said arrangement of elements also offers various possibilities as regards the positioning of the light-emitting member, since the latter could be placed facing each of the ends or edges of the light guide in its configuration as a flat plate. Moreover, it helps make the lighting device compact so that it does not take up too much space, especially in the transverse direction, so that the structure of a door, for example, is not affected.

In a preferred embodiment of the invention, the lighting device successively comprises the housing, at least one light-emitting member, the photolith film and the polarizing element, facing the aperture in the structural panel, and covered by the partially opaque outer cover, the photolith film, the polarizing element and the aperture being superimposed on one another. Said arrangement of elements maximizes performance in terms of confining the field of illumination of the light emitted towards the exterior, to comply with the abovementioned approval requirements so that the lighting device may be switched on while the vehicle is running.

In a preferred embodiment of the invention, the lighting device successively comprises the housing, the reflective element, the light guide, the photolith film and the polarizing element, facing the aperture in the structural panel, and covered by the partially opaque outer covering, the reflective element, the light guide, the photolith film, the polarizing element and the aperture being superimposed on one another. Said arrangement of elements maximizes performance both in terms of homogeneity and light efficiency, and in terms of confining the field of light emission.

The attached drawings show, by way of non-limiting example, a lighting arrangement with an outer cover for a side area of a vehicle. Further features and advantages of said lighting arrangement, forming the subject matter of the present invention, will become apparent from the description of a preferred, but not exclusive, embodiment which is illustrated by way of non-limiting example in the accompanying drawings, in which:

### BRIEF DESCRIPTION OF THE DRAWINGS

Figure 1.- is a general side view of a vehicle and the areas in which the lighting arrangement according to the present invention may be housed.
Figure 2.- is an exploded perspective view of a lighting arrangement on a side of a vehicle.
Figure 3A.- is a plan view of the restricted surface for the visibility of lights with the engine running, at the front of a vehicle, in accordance with the approval requirements.
Figure 3B.- is a plan view of the restricted surface for the visibility of lights with the engine running, at the rear of a vehicle, in accordance with the approval requirements.
Figure 4.- is a detailed perspective view of the polarizing element of the lighting arrangement according to the present invention.
Figure 5.- is a detailed side view in elevation of the light guide for the lighting arrangement according to the present invention.

### DESCRIPTION OF A PREFERRED EMBODIMENT

With reference to the abovementioned figures and according to the reference signs used, these figures show an exemplary preferred embodiment of the invention, which comprises the parts and elements indicated and described in detail below.

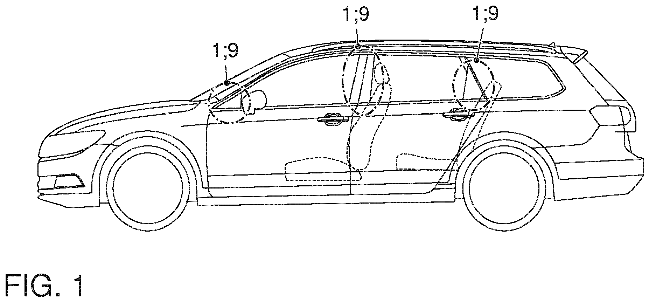

Thus, as can be seen in Figure 1, the invention relates to a lighting arrangement comprising a lighting device intended to be housed in a side area of the vehicle. The function of this lighting device is to light up and highlight a logo positioned on a trim on the side of a vehicle. Such a trim usually consists of plastic parts that improve the surface finish of the vehicle and/or hide areas from view from the outside, for example, the plastic covers indicated on the upright A, B or C of the vehicle in Figure 1.

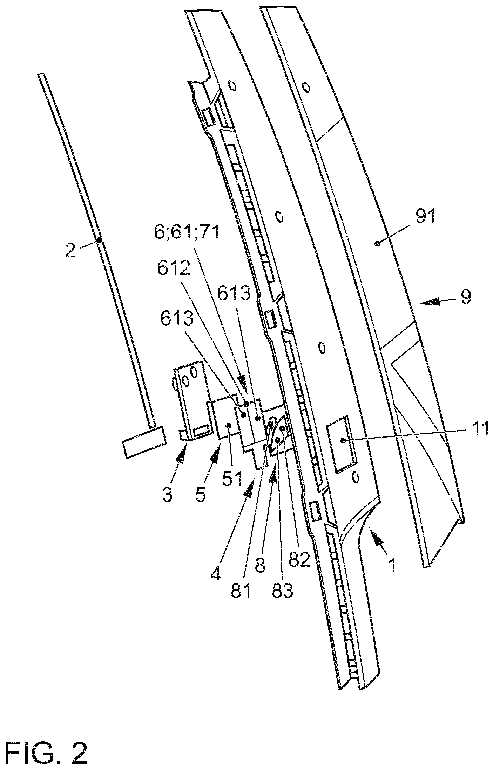

More particularly, as can be seen in the exploded view in Figure 2, the lighting arrangement comprises an outer cover 9 on a side area of a vehicle, in which the outer cover 9 comprises a structural panel 1, in which the structural panel 1 comprises an aperture 11, and in which the lighting arrangement comprises a lighting device, whereby the lighting device comprises a housing 3 facing the aperture 11 and defining an interior volume between the housing 3 and the aperture 11 in the structural panel 1, at least one light-emitting member 4 arranged in the interior volume and actuatable in a first on state or a second off state, a photolith film 8 with at least one graphic element 83, in which the photolith film 8 is arranged between the at least one light-emitting member 4 and the structural panel 1, and in which the outer cover 9 is partially opaque, so as to allow the at least one graphic element 83 to be displayed, in which the lighting device comprises at least one light orientation means 6 such that the light emitted by the at least one light-emitting member 4 is reoriented towards the aperture 11 in the structural panel 1, and in which the at least one light orientation means 6 and the photolith film 8 are housed in the interior volume between the housing 3 and the aperture 11 in the structural panel 1 and are arranged parallel to and superimposed on one other. A very compact structure is thus obtained, especially in the direction transverse or perpendicular to the direction of forward travel of the vehicle, without requiring alteration of the structure of the outer cover 9 or the structural panel 1. Figure 2 shows a possible use of the present invention for lighting up a logo arranged in the outer cover 9 of an upright B of a vehicle.

The housing 1 comprises the whole assembly and is used for securing to the internal structure or substrate itself. It also ensures that light does not escape through the ends of the light guide. As can be seen in Figure 2, it takes the form of a box with a recess that encloses all the intermediate parts so that there is no movement, loss of light, etc.

There are two alternatives for the lighting device, one in which the logo or graphic element 83 is only displayed when the at least one light-emitting member is in a first on state, and another in which the logo or graphic element 83 is also displayed when the at least one light-emitting member is in a second off state, by including, for example, a chrome-plated contour or the like in the photolith film 8.

More particularly, as can be seen in Figure 2, the at least one light orientation means 6 comprises a light guide 61. Preferably, said light guide 61 is a methacrylate component with the same geometry as the photolith film 8 to be illuminated, arranged adjacent to and just behind the photolith film 8, in the direction of emission of light towards the aperture 11 in the structural panel 1.

More specifically, as can be seen in Figure 2, the light guide 61 is an essentially flat plate, in which the light guide 61 comprises at least one light transmission surface 611 and at least one end 612 where the light emitted by the at least one light-emitting member 4 strikes, so that the at least one light transmission surface 611 is substantially parallel to the photolith film 8. In a preferred embodiment, the light-emitting member 4 is oriented towards the lower side or end 612 of the light guide, said light-emitting member 4 thus being located at a lower level than said light guide 61.

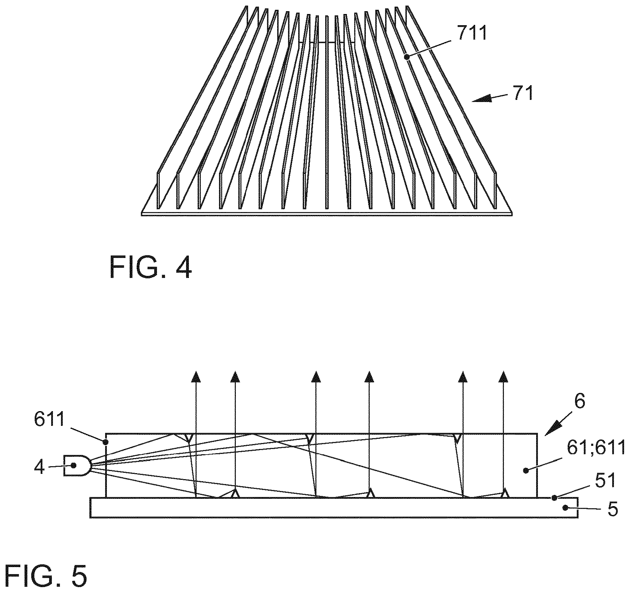

According to a preferred embodiment, as can be seen in Figure 5, the light guide 61 comprises a plurality of optical structures 613 such that the light is dispersed particularly in a direction substantially perpendicular to the at least one light transmission surface 611. The light is thus emitted in a first direction and reflected towards a second direction substantially perpendicular to the first direction. In this way, the entire light transmission surface 611 is lit up homogeneously, avoiding the creation of auras and divergent light intensities in the logo 8, as well as minimizing the space occupied by the lighting device, especially critical in said transverse direction.

Note that, as can be seen in Figure 2, the lighting device comprises a reflective element 5 arranged between the housing 3 and the light guide 61, so that the reflective element 5 is substantially parallel to the at least one light transmission surface 611 of the light guide 61.

Furthermore, as can be seen in Figure 2, the reflective element 5 comprises at least one matt white surface 51.

According to the invention, as can be seen in Figures 2 and 4, the at least one light orientation means 6 is a polarizing element 71.

More particularly, as can be seen in Figure 4, the polarizing element 71 is a film comprising a plurality of microwalls 711 that restrict the direction of exit of the light.

According to another aspect of the invention, as can be seen in Figure 2, the photolith film 8 comprises at least one first opaque zone 81 and at least one second transparent zone 82. It is thus possible to generate, by means of the zones that allow the transmission of light (second transparent zone 82), an element to be illuminated, corresponding to the desired logo or image to be highlighted.

Note that, as can be seen in Figure 2, the at least one first opaque zone 81 is obtained by applying paint to the photolith film 8 and the at least one second transparent zone 82 is obtained by lasering to remove the paint. Another alternative to lasering is to make a negative structure similar to the one used in photography. This affords very high definition and precision but, however, is more expensive.

According to another aspect of the invention, as can be seen in Figures 1 and 2, the partially opaque outer cover 9 has a smoked black finish. The invention relates to the illumination of a trim element in such a way that, when the light emitting assembly is off, the lighting system is not visible; the user simply sees a trim element or outer cover 9 with the same quality and appearance as those currently fitted to a motor vehicle. Conversely, when the at least one light-emitting member 4 is in a first on state, the user sees a trim element or moulding with an illuminated figure or logo 8.

More specifically, as can be seen in Figures 1 and 2, the partially opaque outer cover 9 is produced by bi-injection moulding, in which the smoked black finish is injected into an outer face 91 of the structural panel 1.

As can be seen in Figure 2, the lighting device successively comprises the housing 3, the reflective element 5, the light guide 61 and the photolith film 8, facing the aperture 11 in the structural panel 1, and covered by the partially opaque outer cover 9, the reflective element 5, the light guide 61, the photolith film 8 and the aperture 11 being superimposed on one another.

According to a preferred embodiment of the invention, as can be seen in Figure 2, the lighting device successively comprises the housing 3, at least one light-emitting member 4, the photolith film 8 and the polarizing element 71, facing the aperture 11 in the structural panel 1, and covered by the partially opaque outer cover 9, the photolith film 8, the polarizing element 71 and the aperture 11 being superimposed on one another.

According to another preferred embodiment of the invention, as can be seen in Figure 2, the lighting device successively comprises the housing 3, the reflective element 5, the light guide 61, the photolith film 8 and the polarizing element 71, facing the aperture 11 in the structural panel 1, and covered by the partially opaque outer cover 9, the reflective element 5, the light guide 61, the photolith film 8, the polarizing element 71 and the aperture 11 being superimposed on one another. Note that the reflective element 5, the light guide 61 and photolith film 8 are substantially similar in size.

The details, shapes, dimensions and other accessory elements may be easily replaced by others within the scope defined by the claims which follow the list below.

### List of reference signs:

- 1: structural panel
- 11: aperture
- 2: lower structure
- 3: housing
- 4: light-emitting member
- 5: reflective element
- 51: matt white surface
- 6: light orientation means
- 61: light guide
- 611: light transmission surface
- 612: end
- 613: optical structures
- 71: polarizing element
- 711: microwalls
- 8: photolith film
- 81: first opaque zone
- 82: second transparent zone
- 83: graphic element
- 9: outer cover
- 91: outer face

## Claims

1. Lighting arrangement comprising an outer cover (9) for a side area of a vehicle, wherein the outer cover (9) comprises:
- a structural panel (1), in which the structural panel (1) comprises an aperture (11), and wherein the arrangement comprises a lighting device, wherein the lighting device comprises:
- a housing (3) facing the aperture (11) and defining an interior volume between the housing (3) and the aperture (11),
- at least one light-emitting member (4) arranged in the interior volume and actuatable in a first on state or a second off state,
- a photolith film (8) with at least one graphic element (83), in which the photolith film (8) is arranged between the at least one light-emitting member (4) and the structural panel (1), and in which the outer cover (9) is partially opaque, so as to enable the at least one graphic element (83) to be displayed,
**characterized in that** the lighting device comprises at least one light orientation means (6), wherein the at least one light orientation means (6) is a polarizing element (71), such that the direction of the light emitted by the at least one light-emitting member (4) is restricted, confining the field of illumination of light emitted towards the exterior, and in which the at least one light orientation means (6) and the photolith film (8) are housed in the interior volume between the housing (3) and the aperture (11) and are arranged parallel to and superimposed on one another.

2. Arrangement, according to Claim 1, **characterized in that** the at least one light orientation means (6) further comprises a light guide (61).

3. Arrangement, according to Claim 2, **characterized in that** the light guide (61) is an essentially flat plate, in which the light guide (61) comprises at least one light transmission surface (611) and at least one end (612) where the light emitted by the at least one light-emitting member (4) strikes, so that the at least one light transmission surface (611) is substantially parallel to the photolith film (8).

4. Arrangement, according to Claim 2, **characterized in that** the light guide (61) comprises a plurality of optical structures (613) such
that the light is dispersed particularly in a direction substantially perpendicular to the at least one light transmission surface (611).

5. Arrangement, according to Claim 2, **characterized in that** the lighting device comprises a reflective element (5) arranged between the housing (3) and the light guide (61), so that the reflective element (5) is substantially parallel to the at least one light transmission surface (611) of the light guide (61).

6. Arrangement, according to Claim 5, **characterized in that** the reflective element (5) comprises at least one matt white surface (51).

7. Arrangement, according to Claim 1, **characterized in that** the polarizing element (71) is a film comprising a plurality of microwalls (711) that restrict the direction of exit of the light.

8. Arrangement, according to Claim 1, **characterized in that** the photolith film (8) comprises at least one first opaque zone (81) and at least one second transparent zone (82).

9. Arrangement, according to Claim 8, **characterized in that** the at least one first opaque zone (81) is obtained by applying paint to the photolith film (8) and the at least one second transparent zone (82) is obtained by lasering to remove the paint.

10. Arrangement, according to Claim 1, **characterized in that** the partially opaque outer cover (9) has a smoked black finish.

11. Arrangement, according to Claim 10, **characterized in that** the partially opaque outer cover (9) is produced by bi-injection moulding, in which the smoked black finish is injected into an outer face (91) of the structural panel (1).

12. Arrangement, according to Claim 1, **characterized in that** it successively comprises the housing (3), at least one light-emitting
member (4), the photolith film (8) and the polarizing element (71), facing the aperture (11) in the structural panel (1), and covered by the partially opaque outer cover (9), the photolith film (8), the polarizing element (71) and the aperture (11) being superimposed on one another.

13. Arrangement, according to Claims 1, 2 and 5, **characterized in that** it successively comprises the housing (3), the reflective element (5), the light guide (61), the photolith film (8) and the polarizing element (71), facing the aperture (11) in the structural panel (1), and covered by the partially opaque outer cover (9), the reflective element (5), the light guide (61), the photolith film (8), the polarizing element (71) and the aperture (11) being superimposed on one another.

## Patentansprüche

1. Beleuchtungsanordnung, umfassend eine äußere Abdeckung (9) für einen Seitenbereich eines Fahrzeugs, wobei die äußere Abdeckung (9) Folgendes umfasst:
- eine strukturelle Platte (1), wobei die strukturelle Platte (1) eine Öffnung (11) umfasst, und wobei die Anordnung eine Beleuchtungsvorrichtung umfasst, wobei die Beleuchtungsvorrichtung Folgendes umfasst:
- ein Gehäuse (3), das der Öffnung (11) gegenüberliegt und ein inneres Volumen zwischen dem Gehäuse (3) und der Öffnung (11) definiert,
- mindestens ein Licht emittierendes Element (4), das im inneren Volumen angeordnet ist und in einen ersten eingeschalteten Zustand oder einen zweiten ausgeschalteten Zustand betätigt werden kann,
- einen Fotolithfilm (8) mit mindestens einem graphischen Element (83), wobei der Fotolithfilm (8) zwischen dem mindestens einen Licht emittierenden Element (4) und der strukturellen Platte (1) angeordnet ist, und wobei die äußere Abdeckung (9) teilweise undurchsichtig ist, um zu ermöglichen, dass das mindestens eine graphische Element (83) angezeigt wird.
**dadurch gekennzeichnet, dass** die Beleuchtungsvorrichtung mindestens ein Lichtausrichtungsmittel (6) umfasst, wobei das mindestens eine Lichtausrichtungsmittel (6) ein polarisierendes Element (71) ist, so dass die Richtung des Lichts, emittiert durch das mindestens eine Licht emittierende Element (4), eingeschränkt ist, wodurch das Beleuchtungsfeld von Licht, das nach außen emittiert wird, beschränkt wird, und wobei das mindestens eine Lichtausrichtungsmittel (6) und der Fotolithfilm (8) im inneren Volumen zwischen dem Gehäuse (3) und der Öffnung (11) aufgenommen sind und parallel zu- und überlagert aufeinander angeordnet sind.

2. Anordnung nach Anspruch 1, **dadurch gekennzeichnet, dass** das mindestens eine Lichtausrichtungsmittel (6) weiter eine Lichtführung (61) umfasst.

3. Anordnung nach Anspruch 2, **dadurch gekennzeichnet, dass** die Lichtführung (61) eine im Wesentlichen flache Platte ist, wobei die Lichtführung (61) mindestens eine Lichtübertragungsfläche (611) und mindestens ein Ende (612) umfasst, auf das das Licht, emittiert durch das mindestens eine Licht emittierende Element (4), fällt, so dass die mindestens eine Lichtübertragungsfläche (611) im Wesentlichen parallel zum Fotolithfilm (8) ist.

4. Anordnung nach Anspruch 2, **dadurch gekennzeichnet, dass** die Lichtführung (61) eine Vielzahl von optischen Strukturen (613) umfasst, so dass das Licht insbesondere in eine Richtung gestreut wird, die im Wesentlichen senkrecht zur mindestens einen Lichtübertragungsfläche (611) ist.

5. Anordnung nach Anspruch 2, **dadurch gekennzeichnet, dass** die Beleuchtungsvorrichtung ein reflektierendes Element (5) umfasst, das zwischen dem Gehäuse (3) und der Lichtführung (61) angeordnet ist, so dass das reflektierende Element (5) im Wesentlichen parallel zur mindestens einen Lichtübertragungsfläche (611) der Lichtführung (61) ist.

6. Anordnung nach Anspruch 5, **dadurch gekennzeichnet, dass** das reflektierende Element (5) mindestens eine mattweiße Fläche (51) umfasst.

7. Anordnung nach Anspruch 1, **dadurch gekennzeichnet, dass** das polarisierendes Element (71) ein Film ist, der eine Vielzahl von Mikrowänden (711) umfasst, die die Richtung des Austritts des Lichts begrenzen.

8. Anordnung nach Anspruch 1, **dadurch gekennzeichnet, dass** der Fotolithfilm (8) mindestens einen ersten undurchsichtigen Bereich (81) und mindestens einen zweiten durchsichtigen Bereich (82) umfasst.

9. Anordnung nach Anspruch 8, **dadurch gekennzeichnet, dass** der mindestens eine undurchsichtige Bereich (81) durch Auftragen von Farbe auf den Fotolithfilm (8) erhalten wird und der mindestens eine zweite durchsichtige Bereich (82) durch Laserung, um die Farbe zu entfernen, erhalten wird.

10. Anordnung nach Anspruch 1, **dadurch gekennzeichnet, dass** die teilweise undurchsichtige äußere Abdeckung (9) eine rauchschwarze Endbearbeitung aufweist.

11. Anordnung nach Anspruch 10, **dadurch gekennzeichnet, dass** die teilweise undurchsichtige Abdeckung (9) durch Dopppelspritzguss erzeugt wird, wobei die rauchschwarze Endbearbeitung in eine äußere Seite (91) der strukturellen Platte (1) injiziert wird.

12. Anordnung nach Anspruch 1, **dadurch gekennzeichnet, dass** sie aufeinanderfolgend das Gehäuse (3), mindestens ein Licht emittierendes Element (4), den Fotolithfilm (8) und das polarisierende Element (71) umfasst, das der Öffnung (11) in der strukturellen Platte (1) gegenüber liegt, und abgedeckt durch die teilweise undurchsichtige äußere Abdeckung (9), wobei der Fotolithfilm (8) das polarisierende Element (71) und die Öffnung (11) einander überlagern.

13. Anordnung nach Anspruch 1, 2 und 5, **dadurch gekennzeichnet, dass** sie aufeinanderfolgend das Gehäuse (3), das reflektierende Element (5), die Lichtführung (61), den Fotolithfilm (8) und das polarisierende Element (71) umfasst, das der Öffnung (11) in der strukturellen Platte (1) gegenüber liegt, und abgedeckt durch die teilweise undurchsichtige äußere Abdeckung (9), wobei das reflektierende Element (5), die Lichtführung (61), der Fotolithfilm (8) das polarisierende Element (71) und die Öffnung (11) einander überlagern.

## Revendications

1. Agencement d'éclairage comprenant un couvercle externe (9) pour une zone latérale d'un véhicule, dans lequel le couvercle externe (9) comprend :
un panneau structurel (1) dans lequel le panneau structurel (1) comprend une ouverture (11), et dans lequel l'agencement comprend un dispositif d'éclairage, dans lequel le dispositif d'éclairage comprend :
un boîtier (3) faisant face à l'ouverture (11) et définissant un volume intérieur entre le boîtier (3) et l'ouverture (11),
au moins un élément d'émission de lumière (4) agencé dans le volume intérieur et pouvant être actionné dans un premier état activé ou un second état désactivé,
un film photolithique (8) avec au moins un élément graphique (83), dans lequel le film photolithique (8) est agencé entre le au moins un élément d'émission de lumière (4) et le panneau structurel (1), et dans lequel le couvercle externe (9) est partiellement opaque, afin de permettre d'afficher le au moins un élément graphique (83),
**caractérisé en ce que** le dispositif d'éclairage comprend au moins un moyen d'orientation de lumière (6), dans lequel le au moins un moyen d'orientation de lumière (6) est un élément polarisant (71), de sorte que la direction de la lumière émise par le au moins un élément d'émission de lumière (4) est limitée, confinant le champ d'éclairage de lumière émise vers l'extérieur, et dans lequel le au moins un moyen d'orientation (6) et le film photolithique (8) sont logés dans le volume intérieur entre le boîtier (3) et l'ouverture (11) et sont agencés parallèlement entre eux et superposés l'un sur l'autre.

2. Agencement selon la revendication 1, **caractérisé en ce que** le au moins un moyen d'orientation de lumière (6) comprend en outre un guide de lumière (61).

3. Agencement selon la revendication 2, **caractérisé en ce que** le guide de lumière (61) est une plaque essentiellement plate, dans lequel le guide de lumière (61) comprend au moins une surface de transmission de lumière (611) et au moins une extrémité (612) où la lumière émise par le au moins un élément d'émission de lumière (4) se heurte, de sorte que la au moins une surface de transmission de lumière (611) est sensiblement parallèle au film photolithique (8).

4. Agencement selon la revendication 2, **caractérisé en ce que** le guide de lumière (61) comprend une pluralité de structures optiques (613) de sorte que la lumière est dispersée en particulier dans une direction sensiblement perpendiculaire à la au moins une surface de transmission de lumière (611).

5. Agencement selon la revendication 2, **caractérisé en ce que** le dispositif d'éclairage comprend un élément réfléchissant (5) agencé entre le boîtier (3) et le guide de lumière (61), de sorte que l'élément réfléchissant (5) est sensiblement parallèle à la au moins une surface de transmission de lumière (611) du guide de lumière (61).

6. Agencement selon la revendication 5, **caractérisé en ce que** l'élément réfléchissant (5) comprend au moins une surface blanc mat (51).

7. Agencement selon la revendication 1, **caractérisé en ce que** l'élément polarisant (71) est un film comprenant une pluralité de micro-parois (711) qui limitent la direction de sortie de la lumière.

8. Agencement selon la revendication 1, **caractérisé en ce que** le film photolithique (8) comprend au moins une première zone opaque (81) et au moins une seconde zone transparente (82).

9. Agencement selon la revendication 8, **caractérisé en ce que** la au moins une première zone opaque (81) est obtenue en appliquant de la peinture sur le film photolithique (8) et la au moins une seconde zone transparente (82) est obtenue en utilisant un laser pour retirer la peinture.

10. Agencement selon la revendication 1, **caractérisé en ce que** le couvercle externe (9) partiellement opaque a un fini noir fumé.

11. Agencement selon la revendication 10, **caractérisé en ce que** le couvercle externe (9) partiellement opaque est produit par moulage par bi-injection, dans lequel le fini noir fumé est injecté dans une face externe (91) du panneau structurel (1).

12. Agencement selon la revendication 1, **caractérisé en ce qu'**il comprend successivement le boîtier (3), au moins un élément d'émission de lumière (4), le film photolithique (8) et l'élément polarisant (71), faisant face à l'ouverture (11) dans le panneau structurel (1) et recouvert par le couvercle externe (9) partiellement opaque, le film photolithique (8), l'élément polarisant (71) et l'ouverture (11) qui sont superposés les uns sur les autres.

13. Agencement selon les revendications 1, 2 et 5, **caractérisé en ce qu'**il comprend successivement le boîtier (3), l'élément réfléchissant (5), le guide de lumière (61), le film photolithique (8) et l'élément polarisant (71), faisant face à l'ouverture (11) dans le panneau structurel (1) et recouvert par le couvercle externe (9) partiellement opaque, l'élément réfléchissant (5), le guide de lumière (61), le film photolithique (8), l'élément polarisant (71) et l'ouverture (11) qui sont superposés les uns sur les autres.
